# EUROPEAN PATENT SPECIFICATION

(11) **EP 0 629 195 B1**
(45) Date of publication and mention of the grant of the patent: **26.05.1999**
(21) Application number: 92915721.2
(22) Date of filing: 05.03.1992
(51) Int. Cl.: C07F 9/655

(54) **SYNTHESIS OF STABLE, WATER-SOLUBLE CHEMILUMINESCENT 1,2-DIOXETANES AND INTERMEDIATES THEREFOR**
SYNTHESE VON STABILEN, WASSERLÖSLICHEN CHEMILUMINESZIERENDEN 1,2-DIOXETANEN UND IHRE ZWISCHENPRODUKTE
SYNTHESE DE 1,2-DIOXETANES CHIMIOLUMINESCENTES, HYDROSOLUBLES ET STABLES, ET INTERMEDIAIRES DE CES COMPOSES

(43) Date of publication of application: 21.12.1994
(73) Proprietor: TROPIX, INC., Bedford, MA 01730-2314 (US)
(72) Inventor: BRONSTEIN, Irena, Y., Newton, MA 02158 (US); EDWARDS, Brooks, Cambridge, MA 01238 (US)
(74) Representative: Weisert, Annekäte, Dipl.-Ing. Dr.-Ing.
(86) International application number: US9201530
(87) International publication number: WO9318022

(56) References cited:
- US-A- 4 956 477

## Description

This application is a continuation-in-part of copending U.S. patent application Serial No. 559,152, filed July 24, 1990, which in turn is a division of copending U.S. patent application Serial No. 367,772, filed July 17, 1989 (based on PCT application PCT/US 89/00016, filed January 3, 1989 in the U.S. Receiving Office based on Japanese patent application No. 185319/88, filed July 25, 1988, and now-abandoned U.S. patent application serial No. 140,197, filed December 31, 1987); hence, Serial No. 367,772 is a continuation-in-part of Serial No. 140,197. US-A-4 956 477, issued September 11, 1990 as a division of Serial No. 367,772, and copending US-A-5 177 241 as a continuation of US-A-4 956 477, are also included in this chain of copending applications.

### Background Art

The above-mentioned copending U.S. patent applications
disclose and claim a new synthesis of stable, watersoluble chemiluminescent 1,2-dioxetanes, particularly ones that are enzymatically cleavable, substituted with stabilizing and solubilizing groups and ring-containing fluorophore moieties.

Among the 1,2-dioxetanes that can be obtained by the novel synthetic methods of this and the above-mentioned applications are those represented by the formula: 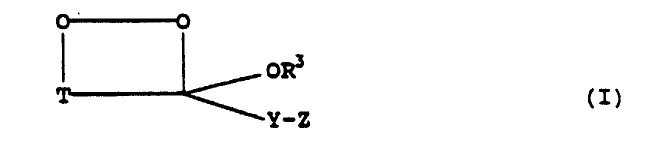 In this formula the symbol T represents a spiro-bonded stabilizing group, a gem carbon atom of which is also the 3-carbon atom of the dioxetane ring.

Also included among the 1,2-dioxetanes that can be obtained using the novel synthetic methods of this and its above-identified predecessor applications are the 3-(substituted adamant-2'-ylidene)-1,2-dioxetanes described in CA-A-2 069 957.

Among the stabilizing groups represented by T are fused, substituted or unsubstituted polycycloalkylidene groups, bonded to the 3-carbon atom of the dioxetane ring through a spiro linkage and having two or more fused rings, each ring having from 3 to 12 carbon atoms, inclusive, e.g, an adamant-2-ylidene group. The fused polycycloalkylidene group may additionally contain unsaturated bonds or 1,2-fused aromatic rings, or X and X' substituents as described hereinbelow.

OR³ is an ether group, preferably a lower alkyl ether group such as a methoxy group, in which the symbol R³ represents a C₁-C₂₀ unbranched or branched, substituted or unsubstituted, saturated or unsaturated alkyl group, e.g., methyl, ethyl, allyl or isobutyl; a heteroaralkyl or aralkyl (including ethylenically unsaturated aralkyl) group, e.g., benzyl or vinylbenzyl; a polynuclear (fused ring) or heteropolynuclear aralkyl group which may be further substituted, e.g., naphthylmethyl or 2-(benzothiazol-2'-yl)ethyl; a saturated or unsaturated cycloalkyl group, e.g., cyclohexyl or cyclohexenyl; a N, O, or S hetero atom containing group, e.g., 4-hydroxybutyl, methoxyethyl, ethoxyethyl or polyalkyleneoxyalkyl; or an aryl group, any of which may be fused to Y such that the emitting fragment contains a lactone ring, or an enzymatically cleavable group containing a bond cleavable by an enzyme to yield an electron-rich moiety bonded to the dioxetane ring. Preferably, OR³ is a methoxy group.

The symbol Y represents a light-emitting fluorophore-forming group, part of a luminescent substance capable of absorbing energy upon decomposition of the 1,2-dioxetane to form an excited state from which it emits optically detectable energy to return to its ground state. Preferred are phenyl, naphthyl, biphenyl, 9,10-dihydrophenanthryl, anthryl, phenanthryl, pyrenyl and dibenzosuberyl groups, or derivatives thereof. The Y group bonded to the Z and 1,2-dioxetane ring moieties at any of its sp² carbon atoms can also be a pyridyl, quinolinyl, isoquinolinyl, coumarinyl, carbostyryl or acridinyl group, or derivatives thereof.

The symbol Z preferably represents an enzyme-cleavable group, preferably a phosphate monoester group, containing a bond cleavable by an enzyme to yield an electron-rich moiety bonded to the dioxetane ring, e.g., a bond which, when cleaved, yields a Y-appended oxygen anion.

One or more of the groups represented by the symbols T, R³ and Z can also include a substituent which enhances the water solubility of the 1,2-dioxetane final products, such as a carboxy or carboxy-containing group, e.g., a carboxymethoxy group, a sulfonic acid group, e.g., an aryl sulfonic acid group, a carboxylic acid or sulfonate salt group, or a quaternary amino salt group, e.g., trimethylammonium chloride, with any appropriate counterion.

Enzymatically cleavable 1,2-dioxetanes can be cleaved using an enzyme such as an alkaline phosphatase that will cleave a bond in, for example, a Z substituent such as a phosphate monoester group, to produce a Y oxyanion of lower oxidation potential that will, in turn, destabilize the dioxetane and cleave its ring oxygen-oxygen bond. Alternatively, catalytic antibodies may be used to cleave the Z substituent. Destabilization can also be accomplished using an enzyme such as an oxido-reductase enzyme that will cleave the oxygen-oxygen bond directly.

### Disclosure of the Invention

It has now been discovered that the 1,2-dioxetanes of formula (I) above and their above-mentioned 3-(substituted adamant-2'-ylidene) analogs can be directly synthesized from enol ether cyanoethyl phosphate diester alkali metal salt intermediates disclosed in the above-identified predecessors of this application, having the formula: 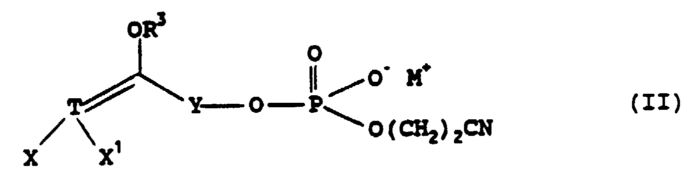 wherein T, Y and R³ are as described hereinabove for formula (I) , X and X¹ each represent, individually, a substituent, e.g., at the 5' and 7' positions on an adamant-2'-ylidene ring, which can be hydrogen; a hydroxyl group (a slightly electron withdrawing group when hydrogen-bonded to water); a halo substituent, i.e., fluoro or chloro (electron withdrawing groups) or bromo or iodo (polarizable, mesomeric groups); an unsubstituted straight or branched chain lower alkyl group, preferably methyl; a substituted straight or branched chain lower alkyl group, monosubstituted or having two or more substituents which can be the same or different, e.g., a hydroxyalkyl group such as a hydroxymethyl group, a haloalkyl group such as trifluoromethyl, and the like; an unsubstituted aryl group, preferably a phenyl group; a substituted aryl group, preferably one whose aryl ring contains six carbon atoms monosubstituted or having two or more substituents which can be the same or different, e.g., a halo substituent, as in p-bromophenyl or p-chlorophenyl, or an alkoxy substituent, e.g., p-methoxyphenyl (an electron donating group); a hydroxyalkoxy substituent, e.g., hydroxyethoxy or hydroxypropoxy, a cyano group, or an amide group, e.g., a formamido or acetamido group; a carboxylic acid group, or an alkoxy or substituted alkoxy group, e.g., a methoxy group or a 4.5-diphenyloxazol-2-ylmethoxy group; and M⁺ represents an alkali metal cation, e.g., Li⁺, K⁺ or Na⁺.

The enol ether cyanoethyl phosphate diester alkali metal salts of formula (II) above can be obtained as described in Bronstein, et al. U.S. Patent No. 4,956,477; see, for example, the reaction scheme at column 7 and column 9, line 49 to column 10, line 10; column 11, line 66 to column 12, line 35 and Example 4.

It has also been discovered that even further advantages can be realized when practicing this invention if the enol ether cyanoethyl phosphate diester alkali metal salt intermediates of formula (II) above are themselves synthesized starting from hydroxyaryl enol ether alkali metal salts prepared as described in copending Edwards, et al. U.S. patent application Serial No. 574,789, filed August 30, 1990, using the following reaction sequence:

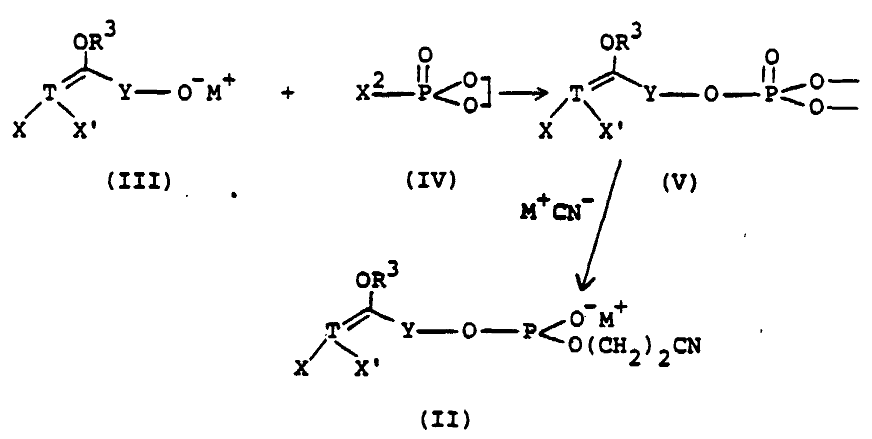

In this reaction sequence T, Y, R³, X, X¹ and M⁺ are as described hereinabove for formulas (I) and (II), and X² is a halogen, preferably chlorine or bromine.

### Best Mode for Carrying Out the Invention

The novel synthetic method of this invention, as indicated above, exhibits its greatest advantages when the first step in the synthesis involves the reaction of a hydroxyaryl enol ether alkali metal salt of formula (III) with a phosphorohalidate of formula (IV), e.g., 2-chloro-2-oxo-1,3,2-dioxaphospholane. This reaction will be carried out in an organic solvent, such as tetrahydrofuran, acetonitrile, dimethyl formamide, dimethyl sulfoxide, or the like, at a temperature of from about room temperature (about 25°C) to about 35°C for from about 24 to about 48 hours. Additionally, small quantities of tertiary amines or phase transfer catalysts may be added where appropriate; see copending Edwards, et al. U.S. patent application Serial No. 574,789.

Reacting the thus-obtained enol ether ethylene phosphate intermediate (V), following removal of the reaction solvent, with an alkali metal cyanide, e.g., sodium cyanide, in a polar, aprotic solvent, such as dimethylformamide, dimethylacetamide, dimethyl sulfoxide or the like, at a temperature of from about room temperature to about 50°C for from about 24 to about 72 hours, gives the enol ether cyanoethyl phosphate diester alkali metal salt intermediates (II).

Enol ether cyanoethyl phosphate diester alkali metal salts of formula (II) can be oxidized, either as crude products or after chromatographic purification, using singlet oxygen (¹O₂), to give their 1,2-dioxetane counterparts: 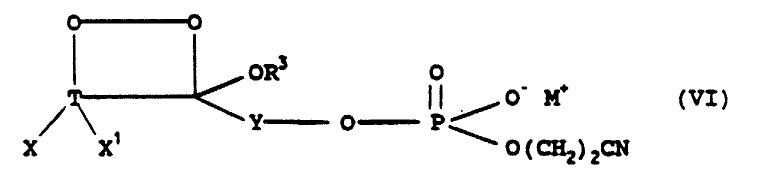 wherein T, Y, R³, X, X¹ and M⁺ are as described hereinabove for formulas (I) and (II).

The conditions used when carrying out this dioxetane ring-forming oxidation reaction can be those described in the literature; see, e.g., Bronstein, et al. U.S. Patent No. 4,956,477, column 13, lines 29-46 and Examples 5, 6, 8-10, inclusive, 15, 17 and 20. The reaction will preferably be carried out at about 5°C or below in the presence of methylene blue, tetraphenylporphine, or the like, in a solvent, preferably one that contains a minimum number of hydrogen atoms per carbon atom that will prolong the lifetime of singlet oxygen in the reaction mixture, e.g., a chlorinated aliphatic hydrocarbon such as methylene chloride, chloroform, carbon tetrachloride, or the like, a ketone such as acetone, or the deuterated analogs thereof.

The 1,2-dioxetane cyanoethyl phosphate diester alkali metal salts of formula (VI) above, when reacted in water at a pH of from about 10 to about 13 with slightly more than one equivalent of sodium hydroxide, lithium hydroxide or the like, or a carbonate such as sodium carbonate, potassium carbonate or the like, or in a lower alkanol, such as methanol or ethanol, with slightly more than one equivalent of an alkali metal alkoxide, such as sodium methoxide, sodium ethoxide or the like, or with lithium hydroxide or potassium hydroxide, give the corresponding 1,2-dioxetane phosphate di-alkali metal salts of the formula: 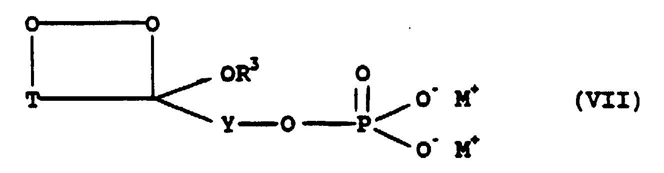 wherein T, Y, R³ and M⁺ are as described hereinabove for formulas (I) and (II). This reaction can be carried out at temperatures ranging from about 0°C to about room temperature for from about 15 minutes or less to about 24 hours. A volatile byproduct of this reaction, acrylonitrile, should be removed from the reaction mixture by subjecting it to reduced pressure, e.g., from about 25 to about 2 mm Hg or less, for sufficient time to drive off the acrylonitrile.

Among the advantages realized when practicing this invention which are not found in previous synthetic methods used to prepare 1,2-dioxetane phosphates, particularly when the enol ether cyanoethyl phosphate diester alkali metal salt intermediates of formula (II) above are themselves synthesized starting from the corresponding hydroxyaryl enol ether alkali metal salts, are:
- the photooxygenation reaction using singlet oxygen can be carried out more rapidly using higher enol ether concentrations -- up to 3-4 times greater than in previous processes -- due to the enhanced solubility of the enol ether cyanoethyl phosphate diester alkali metal salt intermediates in chlorinated aliphatic hydrocarbon solvents typically used for this reaction; as a result,
- throughput is increased without increasing the size of the equipment used.

In order that those skilled in the art can more fully understand this invention, the following examples are set forth. These examples are given solely for purposes of illustration, and should not be considered as expressing limitations unless so set forth in the appended claims. All parts and percentages are weight by volume, unless otherwise indicated.

### EXAMPLE 1

Sodium 3-(methoxytricyclo[3.3.1.1^{3,7}]dec-2-ylidenemethyl)phenoxide (6.07 g, 20.0 mmol) was dissolved in 75 ml of dry tetrahydrofuran in a flask under argon. The resulting brown solution was stirred during the addition of triethylamine (0.87 ml, 6.0 mmol). The flask was then cooled in an ice bath, with vigorous stirring, as 2-chloro-2-oxo-1,3,2-dioxaphospholane (2.29 ml, 24.8 mmol) was added dropwise by syringe. The mixture became slightly cloudy while the color lightened somewhat. The ice bath was removed and the mixture was stirred at room temperature for 27 hours. The solvent was then stripped, with exclusion of moisture to prevent any hydrolysis of the resulting oily, cyclic phosphate triester. An infrared spectrum of the product in dichloromethane was devoid of any absorbances between 3500 and 3300 cm⁻¹, and displayed a strong peak at 1300 cm⁻¹ (P=O).

The thus-obtained cyclic phosphate was dissolved in 60 ml of dry dimethylformamide to give a slightly cloudy solution. Dry sodium cyanide (1.22 g, 25.0 mmol) was then added under a blanket of argon with stirring. After a reaction period of 48 hours at room temperature, DMF was removed in vacuo (50°C, 1.0 mm Hg) to give a viscous brown oil, which was then dissolved in 75 ml of methanol and filtered to partially remove a finely divided solid. The filtrate was concentrated and again pumped in vacuo for several hours (40°C, 1.0 mm Hg) to further remove DMF. The crude sodium 2-cyanoethyl-3-(methoxytricyclo[3.3.1.1^{3,7}]dec-2-ylidenemethyl)phenyl phosphate obtained was triturated twice with 75 ml of ethyl ether and pumped to give a tacky, brown foam weighing 10.3 g. An aqueous sample of the phosphate diester, still occluding some DMF and sodium chloride, was subjected to analytical reverse phase chromatography (Polymer Laboratories PLRP-S polystyrene column using an acetonitrile-water gradient). Under the conditions employed, the enol ether cyanoethyl phosphate diester eluted as the major peak (detection at 270 nm) with a retention time of 10.4 minutes. A sample of the enol ether cyanoethyl phosphate diester prepared as described in U.S. Patent No. 4,956,477 eluted with the same retention time.

### EXAMPLE II

The crude sodium 2-cyanoethyl-3-(methoxytricyclo[3.3.1.1^{3,7}]dec-2-ylidenemethyl)phenyl phosphate obtained as described in Example I, supra, was dissolved in 150 ml of chloroform and a saturated solution of methylene blue in chloroform (1.0 ml) was added. This solution was cooled to 0°C, sparged with a flow of oxygen gas and irradiated with a 400 watt, high pressure sodium vapor lamp. The lamp was surrounded with a piece of Kapton polyimide film (DuPont, 5 mil) to filter out unwanted U.V. and blue wavelengths. After 10 minutes another 0.5 ml of the methylene blue solution was added and irradiation was continued for 5 additional minutes. The analytical HPLC chromatogram of an aqueous sample of the photolysate solution revealed the presence of the corresponding 1,2-dioxetane phosphate cyanoethyl diester as a sharp peak, eluting at 10.1 minutes. No enol ether precursor was detected.

The thus-obtained photolysate solution was rotary evaporated (25°C) to give the crude dioxetane as a green gum, which was immediately dissolved in 30 ml of methanol. Sodium methoxide (4.10 ml of a 4.3 molar solution in methanol) was added dropwise with stirring at room temperature. After a reaction period of 30 minutes, analytical reverse phase HPLC showed that β-elimination of the cyanoethyl group was complete. The light brown, slightly cloudy reaction mixture was concentrated to a paste which was then dissolved in 250 ml of deionized water. This solution, which exhibited a pH of 12.1, was filtered (0.45 µ nylon membrane) and subjected to preparative reverse phase HPLC using an acetonitrile-water gradient as described in U.S. Patent No. 4,931,569. The appropriate eluant fractions were combined and lyophilized to give 6.16 g (72%) of disodium 3-(4-methoxy-spiro(1,2-dioxetane-3,2'-tricyclo[3.3.1.1^{3,7}]-decan-4-yl)phenyl phosphate as a fluffy white solid, corresponding to the product obtained in Example 107 of copending Edwards, et al. U.S. patent application Serial No. 402,847, filed September 6, 1989.

## Claims (Claims for the following Contracting State(s): BE, CH, LI, DE, DK, FR, GB, IT, LU, NL, SE)

1. A method of synthesizing a 1,2-dioxetane phosphate alkali metal salt which comprises:
(a) reacting a hydroxyaryl enol ether alkali metal salt having the formula: 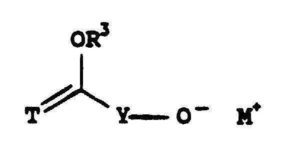 wherein T is a fused, substituted or unsubstituted polycycloalkylidene group, OR³ is an ether group, Y is a light-emitting fluorophore-forming group which will be part of a luminescent substance formed by decomposition of the subsequently-formed 1,2-dioxetane phosphate alkali metal salt, capable of absorbing energy to form an excited state from which it emits optically detectable energy to return to its ground state, and M⁺ is an alkali metal cation, with a phosphorohalidate having the formula: 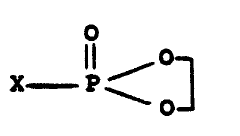 wherein X is a halogen, to give an enol ether ethylene phosphate having the formula: 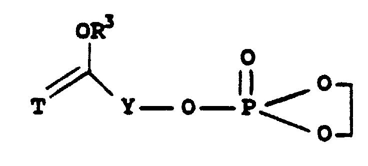
(b) reacting the enol ether ethylene phosphate with an alkali metal cyanide to give an enol ether cyanoethyl phosphate diester alkali metal salt having the formula: 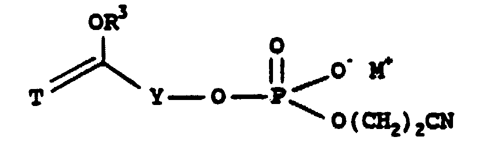
(c) reacting the enol ether cyanoethyl phosphate diester alkali metal salt with singlet oxygen to give a 1,2-dioxetane cyanoethyl phosphate diester alkali metal salt having the formula: 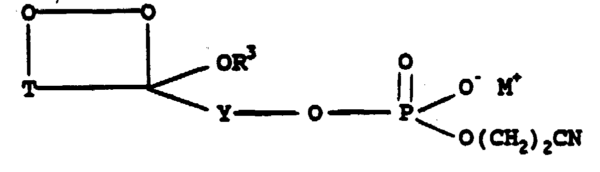 and
(d) reacting the 1,2-dioxetane cyanoethyl phosphate diester alkali metal salt with an alkali metal hydroxide, carbonate or alkoxide to give a 1,2-dioxetane phosphate alkali metal salt having the formula:

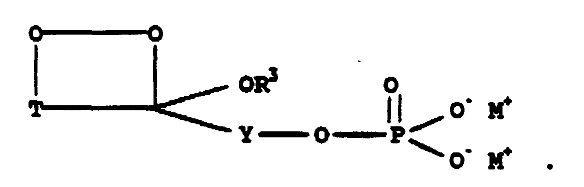

2. A method as described in claim 1 wherein T is an adamant-2'-ylidene group, unsubstituted or substituted with an alkyl, hydroxyalkyl, halo, alkoxy, cyano, hydroxyl or trifluoromethyl group, R³ is methyl, ethyl, benzyl or ethoxyethyl, Y is phenyl and M⁺ is sodium or lithium.

3. A method as described in claim 1 wherein the hydroxyaryl enol ether alkali metal salt is sodium 3-(methoxytricyclo[3.3.1.1^{3,7}]dec-2-ylidenemethyl)phenoxide and the 1,2-dioxetane phosphate alkali metal salt obtained is disodium 3-(4-methoxyspiro(1,2-dioxetane-3,2'-tricyclo[3,3,1,1^{3,7}]decan-4-yl)phenyl)phosphate.

4. A method of synthesizing a 1,2-dioxetane phosphate alkali metal salt which comprises:
(a) reacting an enol ether cyanoethyl phosphate diester alkali metal salt having the formula: 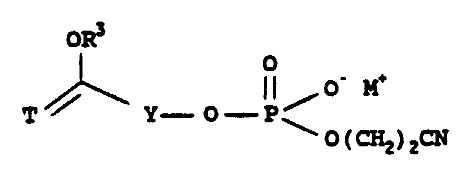 wherein T is a fused, substituted or unsubstituted polycycloalkylidene group, OR³ is an ether group, Y is a light-emitting fluorophore-forming group which will be part of a luminescent substance formed by decomposition of the subsequently-formed 1,2-dioxetane phosphate alkali metal salt, capable of absorbing energy to form an excited state from which it emits optically detectable energy to return to its ground state, and M⁺ is an alkali metal cation, with singlet oxygen to give a 1,2-dioxetane cyanoethyl phosphate diester alkali metal salt having the formula: 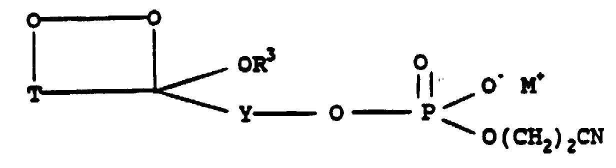 and
(b) reacting the 1,2-dioxetane cyanoethyphosphate diester alkali metal salt with an alkali metal hydroxide, carbonate or alkoxide to give a 1,2-dioxetane phosphate alkali metal salt having the formula:

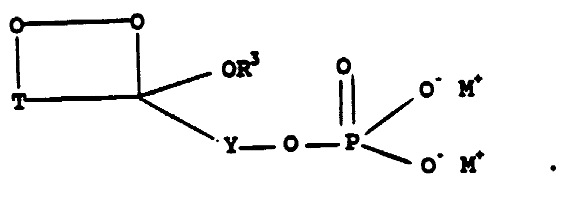

5. A method as described in claim 4 wherein T is an adamant-2'-ylidene group, unsubstituted or substituted with an alkyl, hydroxyalkyl, halo, alkoxy, cyano, hydroxyl or trifluoromethyl group, R³ is methyl, ethyl, benzyl or ethoxyethyl, Y is phenyl and M⁺ is sodium or lithium.

6. A method as described in claim 4 wherein the enol ether cyanoethyl phosphate diester alkali metal salt is sodium 2-cyanoethyl-3-(methoxytricyclo[3.3.1.1^{3,7}]dec-2-ylidenemethyl)phenyl phosphate and the 1,2-dioxetane phosphate alkali metal salt obtained is disodium 3-(4-methoxyspiro(1,2-dioxetane-3,2'-tricyclo[3.3.1.1^{3,7}]decan-4-yl)phenyl)phosphate.

7. A 1,2-dioxetane cyanoethyl phosphate diester alkali metal salt represented by the general formula: 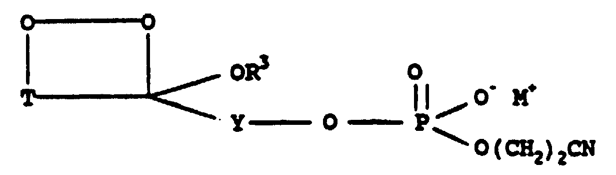 wherein T is a fused, substituted or unsubstituted polycycloalkylidene group, OR³ is an ether group, Y is a light-emitting fluorophore-forming group which will be part of a luminescent substance formed by decomposition of the subsequently-formed 1,2-dioxetane phosphate alkali metal salt, capable of absorbing energy to form an excited state from which it emits optically detectable energy to return to its ground state, and M⁺ is an alkali metal cation.

8. The 1,2-dioxetane cyanoethyl phosphate diester alkali metal salt of claim 7 wherein T is an adamant-2'-ylidene group, unsubstituted or substituted with an alkyl, hydroxyalkyl, halo, alkoxy, cyano, hydroxyl or trifluoromethyl group, R³ is methyl, ethyl, benzyl or ethoxyethyl, Y is phenyl and M⁺ is sodium or lithium.

9. Sodium 2-cyanoethyl-3-(4-methoxy-spiro(1,2-dioxetane-3,2'-tricyclo[3.3.1.1^{3,7}]decan-4-yl)) phenyl phosphate.

## Claims (Claims for the following Contracting State(s): ES)

1. A method of synthesizing a 1,2-dioxetane phosphate alkali metal salt which comprises:
(a) reacting a hydroxyaryl enol ether alkali metal salt having the formula: 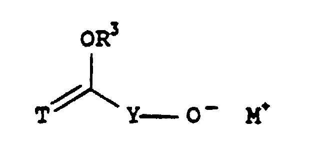 wherein T is a fused, substituted or unsubstituted polycycloalkylidene group, OR³ is an ether group, Y is a light-emitting fluorophore-forming group which will be part of a luminescent substance formed by decomposition of the subsequently-formed 1,2-dioxetane phosphate alkali metal salt, capable of absorbing energy to form an excited state from which it emits optically detectable energy to return to its ground state, and M⁺ is an alkali metal cation, with a phosphorohalidate having the formula: 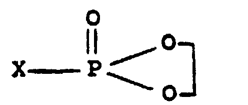 wherein X is a halogen, to give an enol ether ethylene phosphate having the formula: 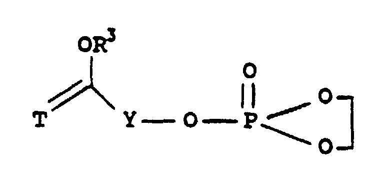
(b) reacting the enol ether ethylene phosphate with an alkali metal cyanide to give an enol ether cyanoethyl phosphate diester alkali metal salt having the formula: 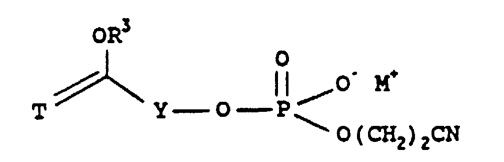
(c) reacting the enol ether cyanoethyl phosphate diester alkali metal salt with singlet oxygen to give a 1,2-dioxetane cyanoethyl phosphate diester alkali metal salt having the formula: 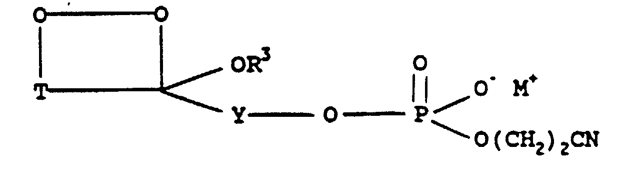 and
(d) reacting the 1,2-dioxetane cyanoethyl phosphate diester alkali metal salt with an alkali metal hydroxide, carbonate or alkoxide to give a 1,2-dioxetane phosphate alkali metal salt having the formula:

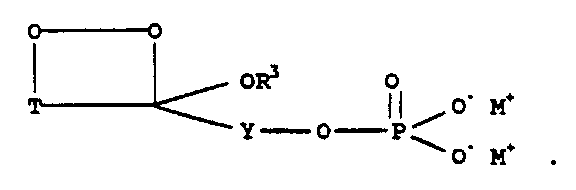

2. A method as described in claim 1 wherein T is an adamant-2'-ylidene group, unsubstituted or substituted with an alkyl, hydroxyalkyl, halo, alkoxy, cyano, hydroxyl or trifluoromethyl group, R³ is methyl, ethyl, benzyl or ethoxyethyl, Y is phenyl and M⁺ is sodium or lithium.

3. A method as described in claim 1 wherein the hydroxyaryl enol ether alkali metal salt is sodium 3-(methoxytricyclo[3.3.1.1^{3,7}]dec-2-ylidenemethyl)phenoxide and the 1,2-dioxetane phosphate alkali metal salt obtained is disodium 3-(4-methoxyspiro(1,2-dioxetane-3,2'-tricyclo[3,3,1,1^{3,7}]decan-4-yl) phenyl)phosphate.

4. A method of synthesizing a 1,2-dioxetane phosphate alkali metal salt which comprises:
(a) reacting an enol ether cyanoethyl phosphate diester alkali metal salt having the formula: 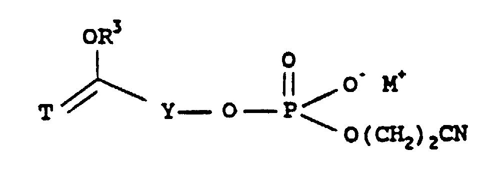 wherein T is a fused, substituted or unsubstituted polycycloalkylidene group, OR³ is an ether group, Y is a light-emitting fluorophore-forming group which will be part of a luminescent substance formed by decomposition of the subsequently-formed 1,2-dioxetane phosphate alkali metal salt, capable of absorbing energy to form an excited state from which it emits optically detectable energy to return to its ground state, and M⁺ is an alkali metal cation, with singlet oxygen to give a 1,2-dioxetane cyanoethyl phosphate diester alkali metal salt having the formula: 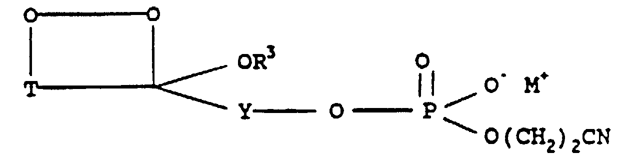 and
(b) reacting the 1,2-dioxetane cyanoethyphosphate diester alkali metal salt with an alkali metal hydroxide, carbonate or alkoxide to give a 1,2-dioxetane phosphate alkali metal salt having the formula:

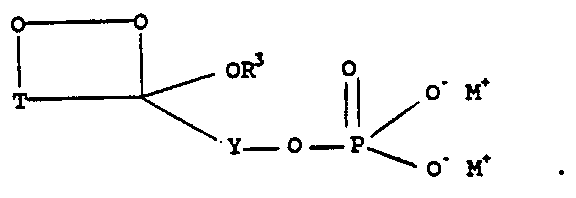

5. A method as described in claim 4 wherein T is an adamant-2'-ylidene group, unsubstituted or substituted with an alkyl, hydroxyalkyl, halo, alkoxy, cyano, hydroxyl or trifluoromethyl group, R³ is methyl, ethyl, benzyl or ethoxyethyl, Y is phenyl and M⁺ is sodium or lithium.

6. A method as described in claim 4 wherein the enol ether cyanoethyl phosphate diester alkali metal salt is sodium 2-cyanoethyl-3-(methoxytricyclo[3.3.1.1^{3,7}]dec-2-ylidenemethyl)phenyl phosphate and the 1,2-dioxetane phosphate alkali metal salt obtained is disodium 3-(4-methoxyspiro(1,2-dioxetane-3,2'-tricyclo[3.3.1.1^{3,7}]decan-4-yl)phenyl)phosphate.

7. A 1,2-dioxetane cyanoethyl phosphate diester alkali metal salt represented by the general formula: 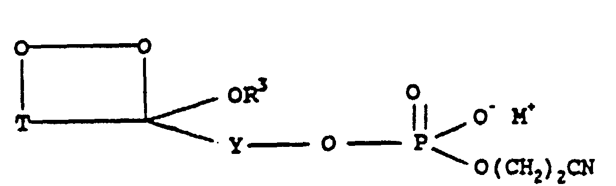 wherein T is a fused, substituted or unsubstituted polycycloalkylidene group, OR³ is an ether group, Y is a light-emitting fluorophore-forming group which will be part of a luminescent substance formed by decomposition of the subsequently-formed 1,2-dioxetane phosphate alkali metal salt, capable of absorbing energy to form an excited state from which it emits optically detectable energy to return to its ground state, and M⁺ is an alkali metal cation.

8. The 1,2-dioxetane cyanoethyl phosphate diester alkali metal salt of claim 7 wherein T is an adamant-2'-ylidene group, unsubstituted or substituted with an alkyl, hydroxyalkyl, halo, alkoxy, cyano, hydroxyl or trifluoromethyl group, R³ is methyl, ethyl, benzyl or ethoxyethyl, Y is phenyl and M⁺ is sodium or lithium.

9. Sodium 2-cyanoethyl-3-(4-methoxy-spiro(1,2-dioxetane-3,2'-tricyclo[3.3.1.1^{3,7}]decan-4-yl)) phenyl phosphate.

10. A method of synthesizing a 1,2-dioxetane cyanoethyl phosphate diester alkali metal salt represented by the general formula: 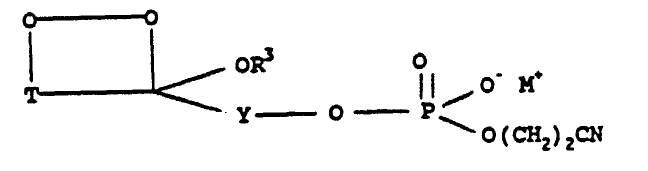 wherein T is a fused, substituted or unsubstituted polycycloalkylidene group, OR³ is an ether group, Y is a light-emitting fluorophore-forming group which will be part of a luminescent substance formed by decomposition of the subsequently-formed 1,2-dioxetane phosphate alkali metal salt, capable of absorbing energy to form an excited state from which it emits optically detectable energy to return to its ground state, and M⁺ is an alkali metal cation, which comprises:
(a) reacting a hydroxyaryl enol ether alkali metal salt having the formula: 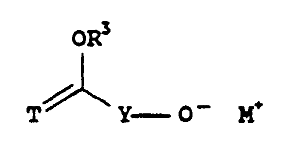 wherein T, OR³, Y and M⁺ are as defined above, with a phosphorohalidate having the formula: 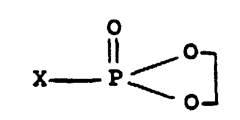 wherein X is a halogen, to give an enol ether ethylene phosphate having the formula: 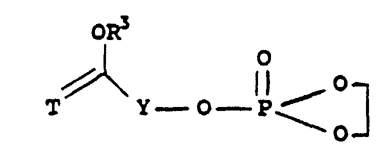
(b) reacting the enol ether ethylene phosphate with an alkali metal cyanide to give an enol ether cyanoethyl phosphate diester alkali metal salt having the formula: 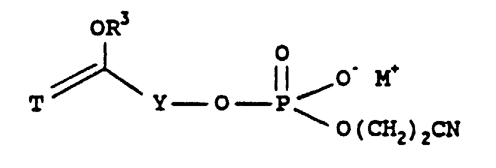
(c) reacting the enol ether cyanoethyl phosphate diester alkali metal salt with singlet oxygen to give the 1,2-dioxetane cyanoethyl phosphate diester alkali metal salt.

11. A method as described in claim 10, wherein T is an adamant-2'-ylidene group, unsubstituted or substituted with an alkyl, hydroxyalkyl, halo, alkoxy, cyano, hydroxyl or trifluoromethyl group, R³ is methyl, ethyl, benzyl or ethoxyethyl, Y is phenyl and M⁺ is sodium or lithium.

12. A method as described in claim 10, wherein T is an adamant-2'-ylidene group, R³ is methyl, Y is phenyl and M⁺ is sodium.

## Patentansprüche (Patentansprüche für folgende(n) Vertragsstaat(en): BE, CH, LI, DE, DK, FR, GB, IT, LU, NL, SE)

1. Verfahren zur Synthese von einem 1,2-Dioxetanphosphatalkalimetallsalz, umfassend:
(a) die Umsetzung eines Hydroxyarylenoletheralkalimetallsalzes der Formel: 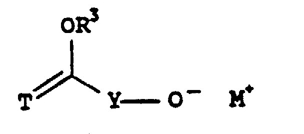 worin T eine kondensierte, substituierte oder unsubstituierte Polycycloalkylidengruppe bedeutet, OR³ eine Ethergruppe bedeutet, Y eine lichtemittierende fluorophorbildende Gruppe bedeutet, die Teil einer lumineszierenden Substanz ist, gebildet durch Zersetzung des darauffolgend gebildeten 1,2-Dioxetanphosphatalkalimetallsalzes, fähig, Energie zu absorbieren unter Bildung eines angeregten Zustands, aus dem es optisch nachweisbare Energie emittiert, um in den Grundzustand zurückzukehren, und M⁺ ein Alkalimetallkation bedeutet, mit einem Phosphorhalidat der Formel: 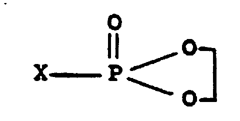 worin X ein Halogen bedeutet, unter Bildung Enoletherethylenphosphats der Formel: 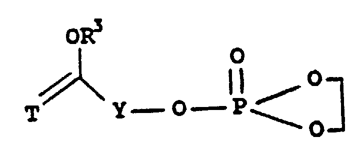
(b) die Umsetzung des Enoletherethylenphosphats mit einem Alkalimetallcyanid unter Bildung eines Enolethercyanoethylphosphatdiesteralkalimetallsalzes der Formel: 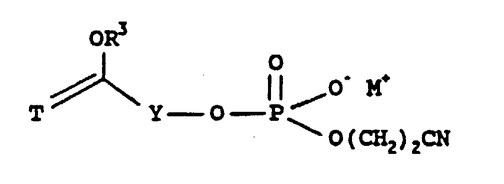
(c) die Umsetzung des Enolethercyanoethylphosphatdiesteralkalimetallsalzes mit Singulett-Sauerstoff unter Bildung eines 1,2-Dioxetancyanoethylphosphatdiesteralkalimetallsalzes der Formel: 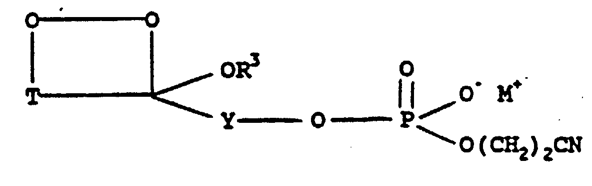 und
(d) die Umsetzung des 1,2-Dioxetancyanoethylphosphatdiesteralkalimetallsalzes mit einem Alkalimetallhydroxid, -carbonat oder -alkoxid unter Bildung eines 1,2-Dioxetanphosphatalkalimetallsalzes der Formel:

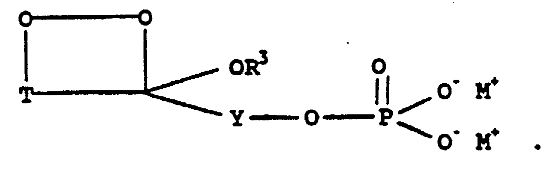

2. Verfahren nach Anspruch 1, dadurch **gekennzeichnet**, daß T eine Adamant-2'-ylidengruppe, unsubstituiert oder substituiert mit einer Alkyl-, Hydroxyalkyl-, Halogen-, Alkoxy-, Cyano- Hydroxyl- oder Trifluormethylgruppe bedeutet, R³ Methyl, Ethyl, Benzyl oder Ethoxyethyl bedeutet, Y Phenyl bedeutet und M⁺ Natrium oder Lithium bedeutet.

3. Verfahren nach Anspruch 1, dadurch **gekennzeichnet**, daß das Hydroxyarylenoletheralkalimetallsalz Natrium-3-(methoxytricyclo[3.3.1.1^{3,7}]dec-2-ylidenmethyl)phenoxid ist und daß das erhaltene 1,2-Dioxetanphosphatalkalimetallsalz Dinatrium-3-(4-methoxyspiro-(1,2-dioxetan-3,2'-tricyclo[3.3.1.1^{3,7}]decan-4-yl)-phenyl)phosphat ist.

4. Verfahren zur Synthese eines 1,2-Dioxetanphosphatalkalimetallsalzes, umfassend:
(a) die Umsetzung eines Enolethercyanoethylphosphatdiesteralkalimetallsalzes der Formel: 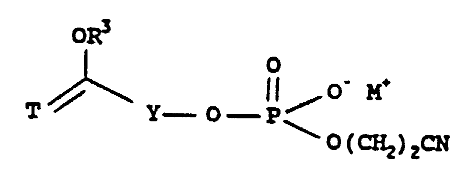 worin T eine kondensierte, substituierte oder unsubstituierte Polycycloalkylidengruppe bedeutet, OR³ eine Ethergruppe bedeutet, Y eine lichtemittierende fluorophorbildende Gruppe bedeutet, die Teil einer lumineszierenden Substanz ist, gebildet durch Zersetzung des darauffolgend gebildeten 1,2-Dioxetanphosphatalkalimetallsalzes, fähig, Energie zu absorbieren unter Bildung eines angeregten Zustands, aus dem sie optisch nachweisbare Energie emittiert, um in ihren Grundzustand zurückzukehren, und M⁺ ein Alkalimetallkation bedeutet, mit Singulett-Sauerstoff unter Bildung eines 1,2-Dioxetancyanoethylphosphatdiesteralkalimetallsalzes der Formel 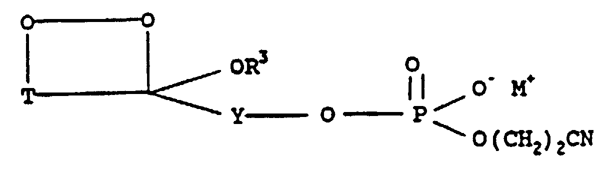 und
(b) Umsetzung des 1,2-Dioxetancyanoethylphosphatdiesteralkalimetallsalzes mit einem Alkalimetallhydroxid, -carbonat oder -alkoxid unter Bildung eines 1,2-Dioxetanphosphatalkalimetallsalzes der Formel:

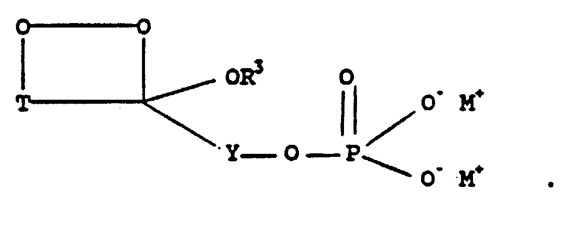

5. Verfahren nach Anspruch 4, dadurch **gekennzeichnet**, daß T eine Adamant-2'-ylidengruppe, unsubstituiert oder substituiert mit einer Alkyl-, Hydroxyalkyl-, Halogen-, Alkoxy-, Cyano-, Hydroxyl- oder Trifluormethylgruppe bedeutet, R³ Methyl, Ethyl, Benzyl oder Ethoxyethyl bedeutet, Y Phenyl bedeutet und M⁺ Natrium oder Lithium bedeutet.

6. Verfahren nach Anspurch 4, dadurch **gekennzeichnet**, daß das Enolethercyanoethylphosphatdiesteralkalimetallsalz Natrium-2-cyanoethyl-3-(methoxytricyclo[3.3.1.1^{3,7}]dec-2-ylidenmethyl)phenylphosphat ist und daß das 1,2-Dioxetanphosphatalkalimetallsalz, das erhalten wird, Dinatrium-3-(4-methoxyspiro-(1,2-dioxetan-3,2'-tricyclo[3.3.1.1^{3,7}]decan-4-yl)phenyl)phosphat ist.

7. 1,2-Dioxetancyanoethylphosphatdiesteralkalimetallsalz, dargestellt durch die allgemeine Formel: 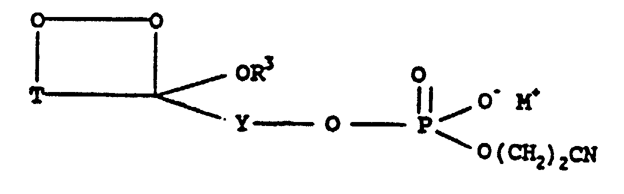 worin T eine kondensierte, substituierte oder unsubstituierte Polycycloalkylidengruppe bedeutet, OR³ eine Ethergruppe bedeutet, Y eine lichtemittierende fluorophorbildende Gruppe bedeutet, die Teil einer lumineszierenden Substanz ist, die durch Zersetzung des anschließend gebildeten 1,2-Dioxetanphosphatalkalimetallsalzes gebildet wird, fähig Energie unter Bildung eines angeregten Zustands zu absorbieren, aus dem sie optisch nachweisbare Energie emittiert, um in den Grundzustand zurückzukehren, und M⁺ ein Alkalimetallkation bedeutet.

8. 1,2-Dioxetancyanoethylphosphatdiesteralkalimetallsalz nach Anspruch 7, dadurch **gekennzeichnet**, daß T eine Adamant-2'-ylidengruppe, unsubstituiert oder substituiert mit einer Alkyl-, Hydroxyalkyl-, Halogen-, Alkoxy-, Cyano-, Hydroxyl- oder Trifluormethylgruppe bedeutet, R³ Methyl, Ethyl, Benzyl oder Ethoxyethyl bedeutet, Y Phenyl bedeutet und M⁺ Natrium oder Lithium bedeutet.

9. Natrium-2-cyanoethyl-3-(4-methoxyspiro-(1,2-dioxetan-3,2'-tricyclo[3.3.1.1^{3,7}]decan-4-yl))phenylphosphat.

## Patentansprüche (Patentansprüche für folgende(n) Vertragsstaat(en): ES)

1. Verfahren zur Synthese von einem 1,2-Dioxetanphosphatalkalimetallsalz, umfassend:
(a) die Umsetzung eines Hydroxyarylenoletheralkalimetallsalzes der Formel: 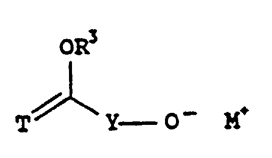 worin T eine kondensierte, substituierte oder unsubstituierte Polycycloalkylidengruppe bedeutet, OR³ eine Ethergruppe bedeutet, Y eine lichtemittierende fluorophorbildende Gruppe bedeutet, die Teil einer lumineszierenden Substanz ist, gebildet durch Zersetzung des darauffolgend gebildeten 1,2-Dioxetanphosphatalkalimetallsalzes, fähig, Energie zu absorbieren unter Bildung eines angeregten Zustands, aus dem es optisch nachweisbare Energie emittiert, um in den Grundzustand zurückzukehren, und M⁺ ein Alkalimetallkation bedeutet, mit einem Phosphorhalidat der Formel: 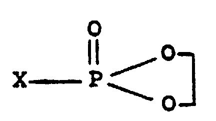 worin X ein Halogen bedeutet, unter Bildung eines Enoletherethylenphosphats der Formel: 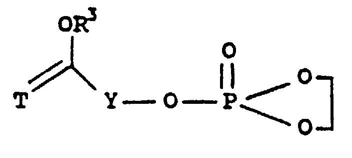
(b) die Umsetzung des Enoletherethylenphosphats mit einem Alkalimetallcyanid unter Bildung eines Enolethercyanoethylphosphatdiesteralkalimetallsalzes der Formel: 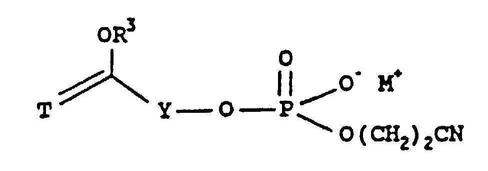
(c) die Umsetzung des Enolethercyanoethylphosphatdiesteralkalimetallsalzes mit Singulett-Sauerstoff unter Bildung eines 1,2-Dioxetancyanoethylphosphatdiesteralkalimetallsalzes der Formel: 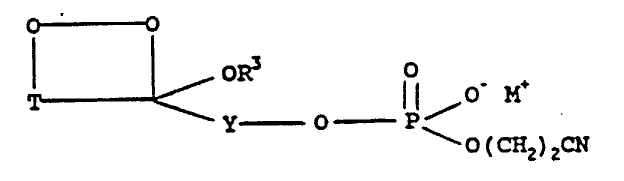 und
(d) Umsetzung des 1,2-Dioxetancyanoethylphosphatdiesteralkalimetallsalzes mit einem Alkalimetallhydroxid, -carbonat oder -alkoxid unter Bildung eines 1,2-Dioxetan-phosphatalkalimetallsalzes der Formel:

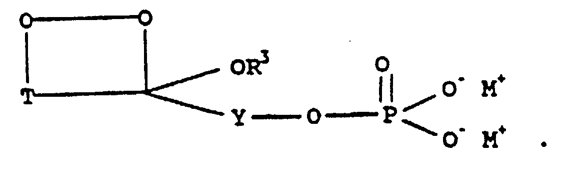

2. Verfahren nach Anspruch 1, dadurch **gekennzeichnet**, daß T eine Adamant-2'-ylidengruppe, unsubstituiert oder substituiert mit einer Alkyl-, Hydroxyalkyl-, Halogen-, Alkoxy-, Cyano- Hydroxyl- oder Trifluormethylgruppe bedeutet, R³ Methyl, Ethyl, Benzyl oder Ethoxyethyl bedeutet, Y Phenyl bedeutet und M⁺ Natrium oder Lithium bedeutet.

3. Verfahren nach Anspruch 1, dadurch **gekennzeichnet**, daß das Hydroxyarylenoletheralkalimetallsalz Natrium-3-(methoxytricyclo[3.3.1.1^{3,7}]dec-2-ylidenmethyl)phenoxid ist und daß das erhaltene 1,2-Dioxetanphosphatalkalimetallsalz Dinatrium-3-(4-methoxyspiro-(1,2-dioxetan-3,2'-tricyclo[3.3.1.1^{3,7}]decan-4-yl)phenyl)phosphat ist.

4. Verfahren zur Synthese eines 1,2-Dioxetanphosphatalkalimetallsalzes, umfassend:
(a) die Umsetzung eines Enolethercyanoethylphosphatdiesteralkalimetallsalzes der Formel: 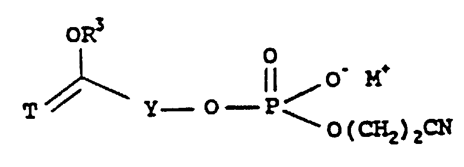 worin T eine kondensierte, substituierte oder unsubstituierte Polycycloalkylidengruppe bedeutet, OR³ eine Ethergruppe bedeutet, Y eine lichtemittierende fluorophorbildende Gruppe bedeutet, die Teil einer lumineszierenden Substanz ist, gebildet durch Zersetzung des darauffolgend gebildeten 1,2-Dioxetanphosphatalkalimetallsalzes, fähig, Energie zu absorbieren unter Bildung eines angeregten Zustands, aus dem sie optisch nachweisbare Energie emittiert, um in ihren Grundzustand zurückzukehren, und M⁺ ein Alkalimetallkation bedeutet, mit Singulett-Sauerstoff unter Bildung eines 1,2-Dioxetancyanoethylphosphatdiesteralkalimetallsalzes der Formel 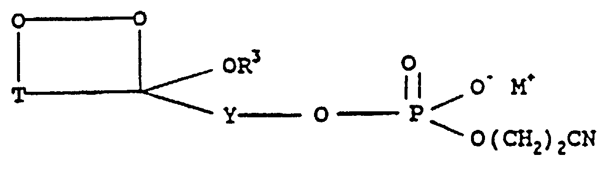 und
(b) die Umsetzung des 1,2-Dioxetancyanoethylphosphatdiesteralkalimetallsalzes mit einem Alkalimetallhydroxid, -carbonat oder -alkoxid unter Bildung eines 1,2-Dioxetan-phosphatalkalimetallsalzes der Formel:

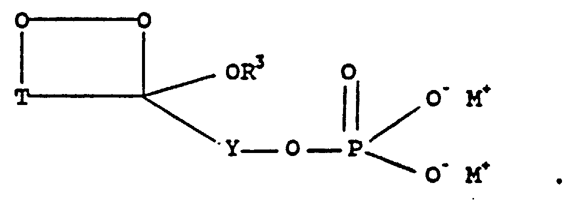

5. Verfahren nach Anspruch 4, dadurch **gekennzeichnet**, daß T eine Adamant-2'-ylidengruppe, unsubstituiert oder substituiert mit einer Alkyl-, Hydroxyalkyl-, Halogen-, Alkoxy-, Cyano-, Hydroxyl- oder Trifluormethylgruppe bedeutet, R³ Methyl, Ethyl, Benzyl oder Ethoxyethyl bedeutet, Y Phenyl bedeutet und M⁺ Natrium oder Lithium bedeutet.

6. Verfahren nach Anspurch 4, dadurch **gekennzeichnet**, daß das Enolethercyanoethylphosphatdiesteralkalimetallsalz Natrium-2-cyanoethyl-3-(methoxytricyclo[3.3.1.1^{3,7}]dec-2-ylidenmethyl)phenylphosphat ist und daß das 1,2-Dioxetanphosphatalkalimetallsalz, das erhalten wird, Dinatrium-3-(4-methoxyspiro-(1,2-dioxetan-3,2'-tricyclo[3.3.1.1^{3,7}]decan-4-yl)phenyl)phosphat ist.

7. 1,2-Dioxetancyanoethylphosphatdiesteralkalimetallsalz, dargestellt durch die allgemeine Formel: 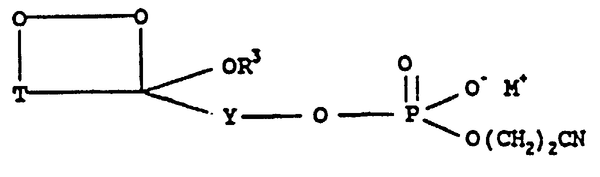 worin T eine kondensierte, substituierte oder unsubstituierte Polycycloalkylidengruppe bedeutet, OR³ eine Ethergruppe bedeutet, Y eine lichtemittierende fluorophorbildende Gruppe bedeutet, die Teil einer lumineszierenden Substanz ist, die durch Zersetzung des anschließend gebildeten 1,2-Dioxetanphosphatalkalimetallsalzes gebildet wird, fähig Energie unter Bildung eines angeregten Zustands zu absorbieren, aus dem sie optisch nachweisbare Energie emittiert, um in den Grundzustand zurückzukehren, und M⁺ ein Alkalimetallkation bedeutet.

8. 1,2-Dioxetancyanoethylphosphatdiesteralkalimetallsalz nach Anspruch 7, dadurch **gekennzeichnet**, daß T eine Adamant-2'-ylidengruppe, unsubstituiert oder substituiert mit einer Alkyl-, Hydroxyalkyl-, Halogen-, Alkoxy-, Cyano-, Hydroxyl- oder Trifluormethylgruppe bedeutet, R³ Methyl, Ethyl, Benzyl oder Ethoxyethyl bedeutet, Y Phenyl bedeutet und M⁺ Natrium oder Lithium bedeutet.

9. Natrium-2-cyanoethyl-3-(4-methoxyspiro-(1,2-dioxetan-3,2'-tricyclo[3.3.1.1^{3,7}]decan-4-yl))phenylphosphat.

10. Verfahren zur Synthese eines 1,2-Dioxetancyanoethylphosphatdiesteralkalimetallsalzes, dargestellt durch die allgemeine Formel: 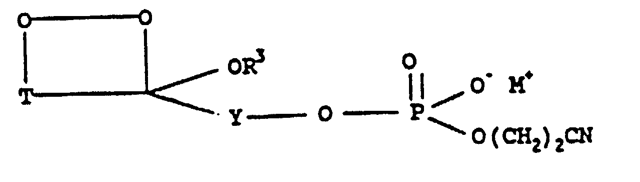 worin T eine kondensierte, substituierte oder unsubstituierte Polycycloalkylidengruppe bedeutet, OR³ eine Ethergruppe bedeutet, Y eine lichtemittierende fluorophorbildende Gruppe bedeutet, die Teil einer lumineszierenden Substanz ist, die durch Zersetzung des anschließend gebildeten 1,2-Dioxetanphosphatalkalimetallsalzes gebildet wird, fähig Energie unter Bildung eines angeregten Zustands zu absorbieren, aus dem sie optisch nachweisbare Energie emittiert, um in den Grundzustand zurückzukehren, und M⁺ ein Alkalimetallkation bedeutet, umfassend:
(a) die Umsetzung eines Hydroxyarylenoletheralkalimetallsalzes der Formel: 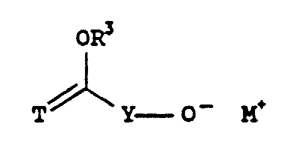 worin T, OR³, Y und M⁺ die oben gegebenen Definitionen besitzen, mit einem Phosphorhalidat der Formel: 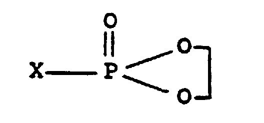 worin X ein Halogen bedeutet, unter Bildung eines Enoletherethylenphosphats der Formel: 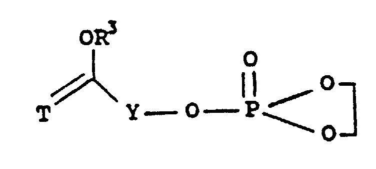
(b) die Umsetzung des Enoletherethylenphosphats mit einem Alkalimetallcyanid unter Bildung eines Enolethercyanoethylphosphatdiesteralkalimetallsalzes der Formel: 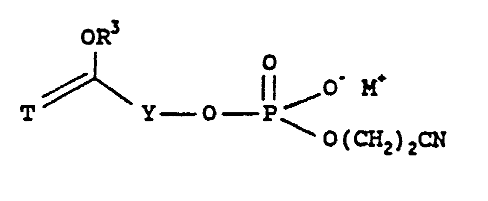
(c) die Umsetzung des Enolethercyanoethylphosphatdiesteralkalimetallsalzes mit Singulett-Sauerstoff unter Bildung von dem 1,2-Dioxetancyanoethylphosphatdiesteralkalimetallsalz.

11. Verfahren nach Anspruch 10, dadurch **gekennzeichnet**, daß T eine Adamant-2'-ylidengruppe, unsubstituiert oder substituiert mit einer Alkyl-, Hydroxyalkyl-, Halogen-, Alkoxy-, Cyano-, Hydroxyl- oder Trifluormethylgruppe bedeutet, R³ Methyl, Ethyl, Benzyl oder Ethoxyethyl bedeutet, Y Phenyl bedeutet und M⁺ Natrium oder Lithium bedeutet.

12. Verfahren nach Anspruch 10, dadurch **gekennzeichnet**, daß T eine Adamant-2'-ylidengruppe bedeutet, R³ Methyl bedeutet, Y Phenyl bedeutet und M⁺ Natrium bedeutet.

## Revendications (Revendications pour l'(les) Etat(s) contractant(s) suivant(s): BE, CH, LI, DE, DK, FR, GB, IT, LU, NL, SE)

1. Procédé de synthèse d'un sel de métal alcalin de type phosphate de 1,2-dioxétane, qui comprend :
(a) la réaction d'un sel de métal alcalin d'un éther d'énol hydroxyarylique, ayant la formule : 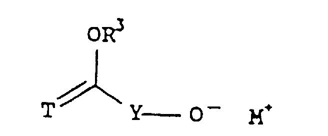 dans laquelle T est un groupe polycycloalkylidène fusionné, substitué ou non substitué, OR³ est un groupe éther, Y est un groupe formant un fluorophore émettant de la lumière qui va faire partie d'une substance luminescente, formée par la décomposition du sel de métal alcalin de type phosphate de 1,2-dioxétane formé par la suite, apte à absorber de l'énergie pour prendre un état excité à partir duquel elle émet une énergie détectable optiquement pour revenir à son état normal, et M⁺ est un cation de métal alcalin, avec un phosphorohalidate ayant la formule : 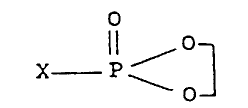 dans laquelle X est un halogène, pour donner un phosphate éthylénique d'éther d'énol ayant la formule : 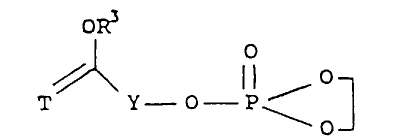
(b) la réaction du phosphate éthylénique d'éther d'énol avec un cyanure de métal alcalin pour donner un sel de métal alcalin d'un diester phosphorique cyanoéthylique d'éther d'énol, ayant la formule : 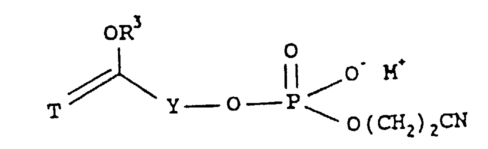
(c) la réaction du sel de métal alcalin du diester phosphorique cyanoéthylique d'éther d'énol avec de l'oxygène singulet pour donner un sel de métal alcalin d'un diester phosphorique cyanoéthylique de 1,2-dioxétane ayant la formule : 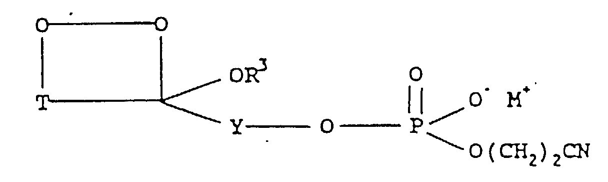 et
(d) la réaction du sel de métal alcalin du diester phosphorique cyanoéthylique de 1,2-dioxétane avec un hydroxyde, carbonate ou alcoxyde de métal alcalin, pour donner un sel de métal alcalin de type phosphate de 1,2-dioxétane ayant la formule :

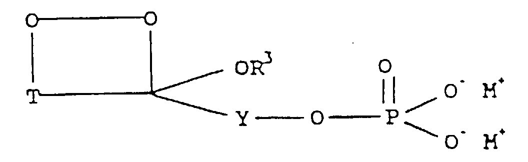

2. Procédé selon la revendication 1, dans lequel T est un groupe adamant-2'-ylidène, non substitué ou substitué avec un groupe alkyle, hydroxyalkyle, halogéno, alcoxy, cyano, hydroxyle ou trifluorométhyle, R³ est un groupe méthyle, éthyle, benzyle ou éthoxy-éthyle, Y est un groupe phényle et M⁺ est le sodium ou le lithium.

3. Procédé selon la revendication 1, dans lequel le sel de métal alcalin de l'éther d'énol hydroxy-arylique est le 3-(méthoxytricyclo[3,3,1,1^{3,7}]déc-2-ylidèneméthyl)phénoxyde de sodium, et le sel de métal alcalin de type phosphate de 1,2-dioxétane obtenu est le 3-(4-méthoxyspiro(1,2-dioxétane-3,2'-tricyclo[3,3,1,1^{3,7}]décan-4-yl)phényl)phosphate de disodium.

4. Procédé de synthèse d'un sel de métal alcalin de type phosphate de 1,2-dioxétane, qui comprend :
(a) la réaction d'un sel de métal alcalin d'un diester phosphorique cyanoéthylique d'éther d'énol, ayant la formule : 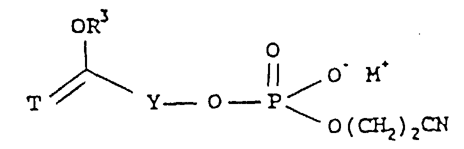 dans laquelle T est un groupe polycycloalkylidène fusionné, substitué ou non substitué, OR³ est un groupe éther, Y est un groupe formant un fluorophore émettant de la lumière qui va faire partie d'une substance luminescente, formée par la décomposition du sel de métal alcalin de type phosphate de 1,2-dioxétane formé par la suite, apte à absorber de l'énergie pour prendre un état excité à partir duquel elle émet une énergie détectable optiquement pour revenir à son état normal, et M⁺ est un cation de métal alcalin, avec de l'oxygène singulet pour donner un sel de métal alcalin d'un diester phosphorique cyanoéthylique de 1,2-dioxétane, ayant la formule : 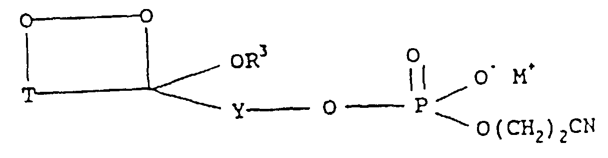 et
(b) la réaction du sel de métal alcalin du diester phosphorique cyanoéthylique de 1,2-dioxétane avec un hydroxyde, carbonate ou alcoxyde de métal alcalin pour donner un sel de métal alcalin de type phosphate de 1,2-dioxétane ayant la formule :

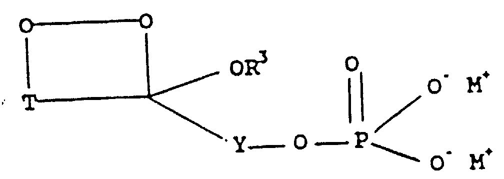

5. Procédé selon la revendication 4, dans lequel T est un groupe adamant-2'-ylidène, non substitué ou substitué avec un groupe alkyle, hydroxyalkyle, halogéno, alcoxy, cyano, hydroxyle ou trifluorométhyle, R³ est un groupe méthyle, éthyle, benzyle ou éthoxy-éthyle, Y est un groupe phényle et M⁺ est le sodium ou le lithium.

6. Procédé selon la revendication 4, dans lequel le sel de métal alcalin du diester phosphorique cyanoéthylique d'éther d'énol est le 2-cyanoéthyl-3-(méthoxytricyclo[3.3.1.1^{3,7}]déc-2-ylidèneméthyl)phénylphosphate de sodium, et le sel de métal alcalin de type phosphate de 1,2-dioxétane obtenu est le 3-(4-méthoxyspiro(1,2-dioxétane-3,2'-tricyclo[3.3.1.1^{3,7}]décan-4-yl)phényl)phosphate de disodium.

7. Sel de métal alcalin d'un diester phosphorique cyanoéthylique de 1,2-dioxétane, représenté par la formule générale : 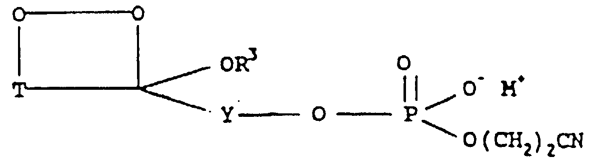 dans laquelle T est un groupe polycycloalkylidène fusionné, substitué ou non substitué, OR³ est un groupe éther, Y est un groupe formant un fluorophore émettant de la lumière qui va faire partie d'une substance luminescente, formée par la décomposition du sel de métal alcalin de type phosphate de 1,2-dioxétane formé par la suite, apte à absorber de l'énergie pour prendre un état excité à partir duquel elle émet une énergie détectable optiquement pour revenir à son état normal, et M⁺ est un cation de métal alcalin.

8. Sel de métal alcalin du diester phosphorique cyanoéthylique de 1,2-dioxétane selon la revendication 7, dans lequel T est un groupe adamant-2'-ylidène, non substitué ou substitué avec un groupe alkyle, hydroxy-alkyle, halogéno, alcoxy, cyano, hydroxyle ou trifluorométhyle, R³ est un groupe méthyle, éthyle, benzyle ou éthoxyéthyle, Y est un groupe phényle et M⁺ est un le sodium ou le lithium.

9. 2-Cyanoéthyl-3-(4-méthoxyspiro(1,2-dioxétane-3,2'-tricyclo[3.3.1.1^{3,7}]décan-4-yl))phénylphosphate de sodium.

## Revendications (Revendications pour l'(les) Etat(s) contractant(s) suivant(s): ES)

1. Procédé de synthèse d'un sel de métal alcalin de type phosphate de 1,2-dioxétane, qui comprend :
(a) la réaction d'un sel de métal alcalin d'un éther d'énol hydroxyarylique, ayant la formule : 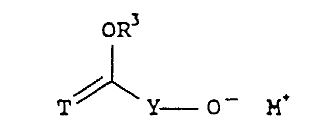 dans laquelle T est un groupe polycycloalkylidène fusionné, substitué ou non substitué, OR³ est un groupe éther, Y est un groupe formant un fluorophore émettant de la lumière qui va faire partie d'une substance luminescente, formée par la décomposition du sel de métal alcalin de type phosphate de 1,2-dioxétane formé par la suite, apte à absorber de l'énergie pour prendre un état excité à partir duquel elle émet une énergie détectable optiquement pour revenir à son état normal, et M⁺ est un cation de métal alcalin, avec un phosphorohalidate ayant la formule : 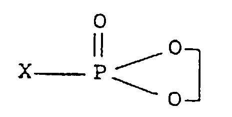 dans laquelle X est un halogène, pour donner un phosphate éthylénique d'éther d'énol ayant la formule : 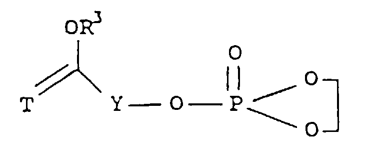
(b) la réaction du phosphate éthylénique d'éther d'énol avec un cyanure de métal alcalin pour donner un sel de métal alcalin d'un diester phosphorique cyanoéthylique d'éther d'énol, ayant la formule : 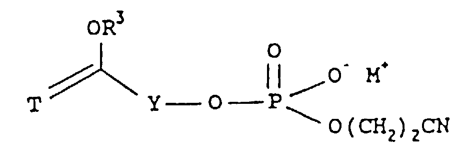
(c) la réaction du sel de métal alcalin du diester phosphorique cyanoéthylique d'éther d'énol avec de l'oxygène singulet pour donner un sel de métal alcalin d'un diester phosphorique cyanoéthylique de 1,2-dioxétane ayant la formule : 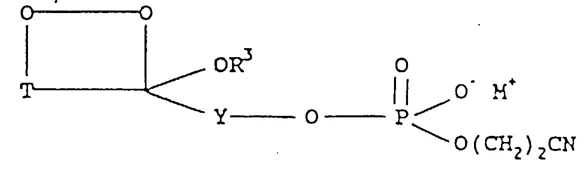 et
(d) la réaction du sel de métal alcalin du diester phosphorique cyanoéthylique de 1,2-dioxétane avec un hydroxyde, carbonate ou alcoxyde de métal alcalin, pour donner un sel de métal alcalin de type phosphate de 1,2-dioxétane ayant la formule :

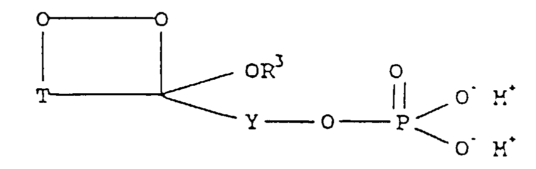

2. Procédé selon la revendication 1, dans lequel T est un groupe adamant-2'-ylidène, non substitué ou substitué avec un groupe alkyle, hydroxyalkyle, halogéno, alcoxy, cyano, hydroxyle ou trifluorométhyle, R³ est un groupe méthyle, éthyle, benzyle ou éthoxy-éthyle, Y est un groupe phényle et M⁺ est le sodium ou le lithium.

3. Procédé selon la revendication 1, dans lequel le sel de métal alcalin de l'éther d'énol hydroxy-arylique est le 3-(méthoxytricyclo[3.3.1.1^{3,7}]déc-2-ylidèneméthyl)phénoxyde de sodium, et le sel de métal alcalin de type phosphate de 1,2-dioxétane obtenu est le 3-(4-méthoxyspiro(1,2-dioxétane-3,2'-tricyclo[3,3,1,1^{3,7}]décan-4-yl)phényl)phosphate de disodium.

4. Procédé de synthèse d'un sel de métal alcalin de type phosphate de 1,2-dioxétane, qui comprend :
(a) la réaction d'un sel de métal alcalin d'un diester phosphorique cyanoéthylique d'éther d'énol, ayant la formule : 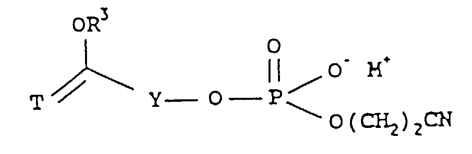 dans laquelle T est un groupe polycycloalkylidène fusionné, substitué ou non substitué, OR³ est un groupe éther, Y est un groupe formant un fluorophore émettant de la lumière qui va faire partie d'une substance luminescente, formée par la décomposition du sel de métal alcalin de type phosphate de 1,2-dioxétane formé par la suite, apte à absorber de l'énergie pour prendre un état excité à partir duquel elle émet une énergie détectable optiquement pour revenir à son état normal, et M⁺ est un cation de métal alcalin, avec de l'oxygène singulet pour donner un sel de métal alcalin d'un diester phosphorique cyanoéthylique de 1,2-dioxétane, ayant la formule : 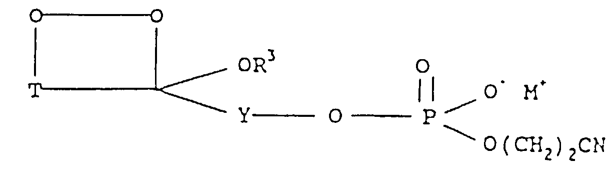 et
(b) la réaction du sel de métal alcalin du diester phosphorique cyanoéthylique de 1,2-dioxétane avec un hydroxyde, carbonate ou alcoxyde de métal alcalin pour donner un sel de métal alcalin de type phosphate de 1,2-dioxétane ayant la formule :

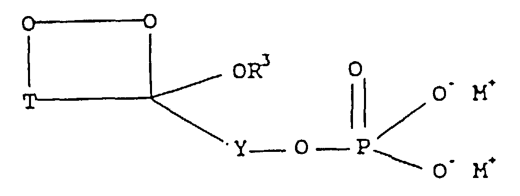

5. Procédé selon la revendication 4, dans lequel T est un groupe adamant-2'-ylidène, non substitué ou substitué avec un groupe alkyle, hydroxyalkyle, halogéno, alcoxy, cyano, hydroxyle ou trifluorométhyle, R³ est un groupe méthyle, éthyle, benzyle ou éthoxy-éthyle, Y est un groupe phényle et M⁺ est le sodium ou le lithium.

6. Procédé selon la revendication 4, dans lequel le sel de métal alcalin du diester phosphorique cyanoéthylique d'éther d'énol est le 2-cyanoéthyl-3-(méthoxytricyclo[3.3.1.1^{3,7}]déc-2-ylidèneméthyl)phényl-phosphate de sodium, et le sel de métal alcalin de type phosphate de 1,2-dioxétane obtenu est le 3-(4-méthoxyspiro(1,2-dioxétane-3,2'-tricyclo[3.3.1.1^{3,7}]décan-4-yl)phényl)phosphate de disodium.

7. Sel de métal alcalin d'un diester phosphorique cyanoéthylique de 1,2-dioxétane, représenté par la formule générale : 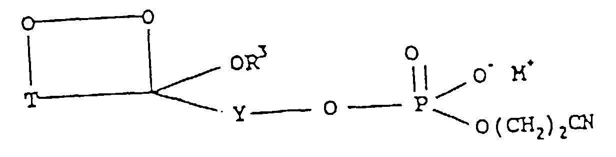 dans laquelle T est un groupe polycycloalkylidène fusionné, substitué ou non substitué, OR³ est un groupe éther, Y est un groupe formant un fluorophore émettant de la lumière qui va faire partie d'une substance luminescente, formée par la décomposition du sel de métal alcalin de type phosphate de 1,2-dioxétane formé par la suite, apte à absorber de l'énergie pour prendre un état excité à partir duquel elle émet une énergie détectable optiquement pour revenir à son état normal, et M⁺ est un cation de métal alcalin.

8. Sel de métal alcalin du diester phosphorique cyanoéthylique de 1,2-dioxétane selon la revendication 7, dans lequel T est un groupe adamant-2'-ylidène, non substitué ou substitué avec un groupe alkyle, hydroxy-alkyle, halogéno, alcoxy, cyano, hydroxyle ou trifluorométhyle, R³ est un groupe méthyle, éthyle, benzyle ou éthoxyéthyle, Y est un groupe phényle et M⁺ est le sodium ou le lithium.

9. 2-Cyanoéthyl-3-(4-méthoxyspiro(1,2-dioxétane-3,2'-tricyclo[3.3.1.1^{3,7}]décan-4-yl))phénylphosphate de sodium.

10. Procédé de synthèse d'un sel de métal alcalin d'un diester phosphorique cyanoéthylique de 1,2-dioxétane représenté par la formule générale : 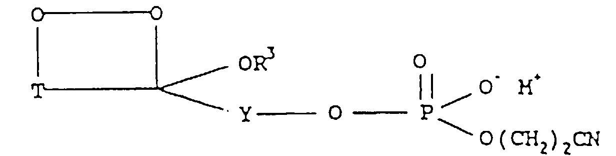 dans laquelle T est un groupe polycycloalkylidène fusionné, substitué ou non substitué, OR³ est un groupe éther, Y est un groupe formant un fluorophore émettant de la lumière qui va faire partie d'une substance luminescente, formée par la décomposition du sel de métal alcalin de type phosphate de 1,2-dioxétane formé par la suite, apte à absorber de l'énergie pour prendre un état excité à partir duquel elle émet une énergie détectable optiquement pour revenir à son état normal, et M⁺ est un cation de métal alcalin, qui comprend :
(a) la réaction d'un sel de métal alcalin d'un éther d'énol hydroxyarylique, ayant la formule : 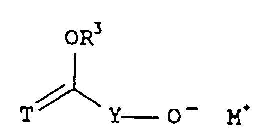 dans laquelle T, OR³, Y et M⁺ sont tels que définis ci-dessus, avec un phosphorohalidate ayant la formule : 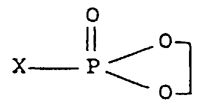 dans laquelle X est un halogène, pour donner un phosphate éthylénique d'éther d'énol ayant la formule : 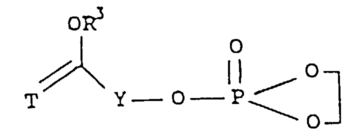
(b) la réaction du phosphate éthylénique d'éther d'énol avec un cyanure de métal alcalin pour donner un sel de métal alcalin d'un diester phosphorique cyanoéthylique d'éther d'énol, ayant la formule : 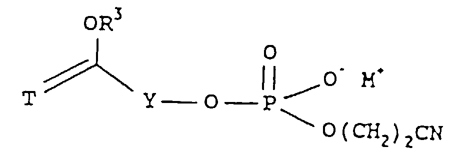
(c) la réaction du sel de métal alcalin du diester phosphorique cyanoéthylique d'éther d'énol avec de l'oxygène singulet pour donner le sel de métal alcalin du diester phosphorique cyanoéthylique de 1,2-dioxétane.

11. Procédé selon la revendication 10, dans lequel T est un groupe adamant-2'-ylidène, non substitué ou substitué avec un groupe alkyle, hydroxyalkyle, halogéno, alcoxy, cyano, hydroxyle ou trifluorométhyle, R³ est un groupe méthyle, éthyle, benzyle ou éthoxy-éthyle, Y est un groupe phényle et M⁺ est le sodium ou le lithium.

12. Procédé selon la revendication 10, dans lequel T est un groupe adamant-2'-ylidène, R³ est un groupe méthyle, Y est un groupe phényle et M⁺ est le sodium.
